(19) Europäisches Patentamt

**European Patent Office**

**Office européen des brevets**

(11) Numéro de publication: **0 296 000 B1**

(12) **FASCICULE DE BREVET EUROPEEN**

(45) Date de publication de fascicule du brevet: **15.04.92** (51) Int. Cl.⁵: **B62D 5/06**

(21) Numéro de dépôt: **88401324.4**

(22) Date de dépôt: **31.05.88**

(54) **Distributeur hydraulique rotatif pour servomécanisme.**

(30) Priorité: **18.06.87 FR 8708506**

(43) Date de publication de la demande:
**21.12.88 Bulletin 88/51**

(45) Mention de la délivrance du brevet:
**15.04.92 Bulletin 92/16**

(84) Etats contractants désignés:
**DE ES FR GB IT**

(56) Documents cités:
**EP-A- 0 171 247        EP-A- 0 187 591**
**EP-A- 0 245 794        DE-A- 2 836 926**
**DE-A- 3 514 406        DE-A- 3 516 219**
**DE-A- 3 529 785**

**PATENT ABSTRACTS OF JAPAN, vol. 8, no. 28 (M-274) [1465], 7 février 1984; & JP-A-58 185 366 (HINO JIDOSHA KOGYO K.K.) 29.10.1983**

(73) Titulaire: **ZF FRIEDRICHSHAFEN Aktiengesellschaft**
**Löwentaler Strasse 100 Postfach 2520**
**W-7990 Friedrichshafen 1(DE)**

(72) Inventeur: **Kervagoret, Gilbert**
**5, Impasse Nobleterre**
**F-95100 Argenteuil(FR)**

Rank Xerox (UK) Business Services

## Description

La présente invention est relative à un distributeur hydraulique rotatif pour servo-mécanisme, en particulier pour direction assistée de véhicule.

Les dispositifs pour assister la direction d'un véhicule, dans une conception répandue, comprennent une pompe hydraulique, en général une pompe à volume constant entraînée par le moteur du véhicule et équipée d'un limiteur de débit, si bien que l'ensemble fournit un débit constant, un réservoir de liquide et un organe moteur d'assistance, qui peut être un vérin. La pompe, le réservoir et l'organe moteur sont reliés hydrauliquement par l'intermédiaire d'un distributeur rotatif qui répartit la pression entre les deux chambres opposés de l'organe moteur en fonction du couple exercé sur la colonne de direction. La situation du répartiteur est commandée par une barre de torsion intercalée entre la colonne de direction et le boîtier de direction, et dont les déformations, sous l'effet du couple, engendrent des déplacements limités d'un élément du distributeur par rapport à un autre, de part et d'autre d'une position symétrique neutre.

Un distributeur rotatif de ce type est décrit dans EP-A-0.187.591, il comprend un élément externe, cylindrique, monté à rotation dans un alésage d'un boîtier, et un élément interne, cylindrique, monté à rotation dans un alésage de l'élément externe, et susceptible d'une rotation limitée, de part et d'autre d'une position neutre,l'élément externe comprenant des orifices d'entrée traversants communiquant avec une source de pression de fluide, au moins une paire d'orifices de distribution communiquant sélectivement avec une des deux chambres opposés d'un organe moteur, et des évidements de retour communiquant en permanence avec le réservoir, l'élément interne présentant pour sa part des rainures longitudinales régulièrement réparties angulairement, et qui, en position symétrique neutre, étranglent dans la même proportion les deux orifices de distribution, et assurent, par ailleurs, une communication permanente entre les orifices d'entrée et les évidements de retour.

Un tel distributeur donne satisfaction, cependant, dans certains cas, on désire avoir plus. Pour un couple d'entrée donné, en effet, la position angulaire relative des éléments externe et interne définit le rapport des accès aux deux chambres de l'organe moteur. Comme la pompe, avec son limiteur de débit, fournit un débit constant de fluide, la différence de pression entre les chambres de l'organe moteur, qui commande la force d'assistance, est directement liée au couple. Dans certains cas, on souhaite que l'assistance dépende en outre d'un autre paramètre, comme la vitesse ou la charge statique ou dynamique du véhicule.

La présente invention a pour but de resoudre ce problème et, plus précisément, de fournir un distributeur du type indiqué plus haut qui permette de faire varier à volonté la force d'assistance, en fonction d'un ou plusieurs paramètres choisis, sans cependant augmenter sensiblement l'encombrement du distributeur ni le prix de revient du circuit d'assistance complet.

On a proposé dans EP-A2-0 171 247 de faire varier l'assistance en fonction de la vitesse du véhicule. En ce cas un élément externe du distributeur peut coulisser axialement sur l'élément interne pour varier la section de passage des rainures de distribution. Mais cette solution n'est pas très satisfaisante pour des considérations d'etanchéité et de tolérance entre les éléments interne et externe.

La présente invention fournit en conséquence un distributeur du type indiqué plus haut, et qui présente pour particularité un organe d'étranglement mobile déplacable par rapport à l'élément externe coopère avec au moins certains des évidements de retour du dit élément externe, ci-après désignés évidements de retour commandés, de façon à pouvoir faire varier, sous l'effet de moyens de commande, la section de passage du retour du fluide entre au moins certaines rainures et le reservoir.

Suivant un mode de réalisation préféré, les évidements de retour commandés sont constitués par des échancrures radiales formées dans une extrémité de l'élément externe, l'organe d'étranglement étant constitué par un manchon coulissant sur l'élément interne et pourvu de doigts qui pénètrent dans lesdites échancrures.

Dans ce cas, de préférence, les moyens de commande comprennent une pièce susceptible de tourner autour d'un axe perpendiculaire à l'axe de rotation du distributeur, cette pièce portant une surface de came qui coopère avec une partie d'appui du manchon et pouvant être entraînée en rotation par un moteur piloté à partir d'un signal électrique de commande, le manchon étant maintenu en appui sur la surface de came par un ressort.

Un tel mode de réalisation aboutit à un distributeur dont les cotes sont peu différentes de celles de l'art antérieur, et à un circuit d'assistance complet relativement peu coûteux.

Il en est de même pour un autre mode de réalisation de l'invention dans lequel les moyens de commande comprennent un piston annulaire associé audit manchon, monté de façon coulissante sur l'élément interne et dans l'alésage du boîtier pour y définir deux cavités, la première cavité étant en communication d'une part avec les-dits évidements de retour et d'autre part avec ledit réservoir au travers de moyens d'étranglement pilotés en fonction d'un signal électrique de commande, la seconde cavité étant en communication libre avec ledit réservoir, des moyens élastiques sollicitant ledit piston vers la position d'étranglement maximum du manchon.

Selon un autre mode de réalisation de l'invention, les évidements de retour commandé sont constitués par un ou plusieurs groupes de trous de faible diamètre qui traversent l'élément externe, et l'organe d'étranglement est constitué par un manchon coulissant axialement sur ledit élément externe, et qui obture complètement ou partiellement un nombre variable desdits trous.

Suivant un mode de réalisation intéressant, et, lui aussi, moins coûteux, les moyens de commande comprennent un pignon monté sur un axe perpendiculaire à l'axe de rotation et ne le rencontrant pas, ce pignon coopérant avec une crémaillère dirigée axialement et portée par le manchon, et étant actionné en rotation par un moteur piloté à partir d'un signal électrique de commande.

L'invention va être décrite plus en détail à l'aide d'exemples pratiques de réalisation, illustrés à l'aide des dessins, parmi lesquels :

Figure 1 est une demi-coupe axiale d'un premier mode de réalisation d'un distributeur selon l'invention.

Figure 2 est une vue schématique développée de la surface extérieure de l'élément interne, avec, en tirets, la position relative des orifices et évidements de l'élément externe quand le distributeur est en position symétrique neutre, la ligne I-I représentant la trace du plan de la figure 1.

Figure 3 est un schéma hydraulique d'une installation équipée du distributeur selon l'invention illustré Figure 1.

Figure 4 est un diagramme montrant la variation de la pression différentielle d'assistance en fonction du couple, pour différents réglages de l'organe d'étranglement.

Figure 5 est une demi-coupe axiale d'un autre mode de réalisation d'un distributeur selon l'invention.

Figure 6 est un schéma hydraulique d'une installation équipée du distributeur selon l'invention illustré Figure 5.

Figure 7 est une demi-coupe axiale partielle d'un troisième mode de réalisation du distributeur selon l'invention.

Figure 8 est une vue schématique développée de la surface intérieure de l'élément externe, avec en tirets les rainures de l'élément interne du distributeur de la figure 7.

Figure 9 est une coupe transversale du distributeur, selon la ligne IX - IX de la figure 8.

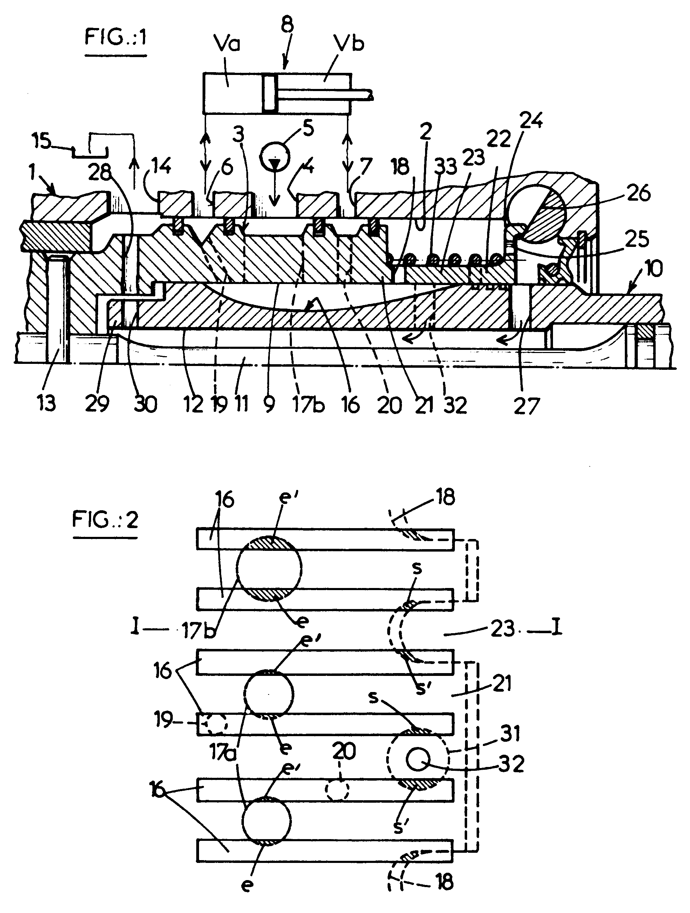

Le distributeur représenté sur les figures 1 et 2, convenant tout particulièrement pour un système de servodirection de véhicule automobile comprend généralement un boîtier de distributeur 1 comportant intérieurement un alésage 2 dans lequel est monté à rotation un élément de distributeur externe cylindrique 3 destiné à être relié, typiquement, à un pignon (non représenté) engrenant avec une crémaillère de direction. Le boîtier 1 comporte, débouchant dans l'alésage 2, un orifice d'admission 4 destiné à être relié à une source de fluide sous pression 5 et, de part et d'autre de l'orifice d'admission 4, des orifices de distribution 6 et 7 destinés à être reliés aux chambres opposées Va et Vb d'un moteur hydraulique d'assistance 8. Les orifices 4, 6 et 7 débouchent dans l'alésage 2 en regard de gorges annulaires d'admission et de distribution séparées de façon étanche les unes des autres formées dans la périphérie externe de l'élément de distributeur externe 3. L'élément de distributeur externe 3 est formé avec un alésage intérieur 9 dans lequel est monté un élément de distributeur interne cylindrique ou rotor 10 destiné, typiquement, à être relié à un organe de commande de distributeur, tel qu'un volant de direction de véhicule (non représenté). L'élément de distributeur interne 10 est solidaire en rotation d'une extrémité d'une barre de torsion 11 s'étendant dans un logement longitudinal central 12 de l'élément de distributeur interne 10 et dont l'autre extrémité est solidarisée, par exemple par un pion 13, à l'élément de distributeur externe 3, dans un agencement permettant une rotation relative limitée des éléments de distrsibuteur interne 10 et externe 3 l'un part rapport à l'autre pour distribuer sélectivement le fluide sous pression en provenance de la source 5 vers l'une ou l'autre des chambres Va et Vb du moteur 8. Au voisinage de la zone de liaison entre l'élément de distributeur externe 3 et la barre de torsionll, le boîtier 1 comporte un orifice de retour 14 débouchant dans l'alésage 2 et destiné à être relié à un réservoir de fluide 15.

L'élément de distributeur interne 10 comporte, à sa périphérie, six rainures longitudinales angulairement réparties 16, de façon régulière, fermées à leurs extrémités axialement opposées. Ces rainures 16 définissent ainsi entre elles des portées lisses externes de l'élément de distributeur interne 10 coopérant en contact coulissant rotatif avec l'alésage 9 de l'élément de distributeur externe 3. L'élément de distributeur externe 3 comporte une série de trois orifices d'entrée traversants angulairement répartis de façon régulière : deux orifices 17a égaux et un orifice 17b plus large, communiquant chacun, dans la position normale de repos ou position neutre du distributeur, avec deux rainures adjacentes 16 de l'élément de distributeur interne 10.

Toute la partie de description qui précède est commune au distributeur de l'invention et à celui de EP-A-O.187.591, document auquel on pourra se rapporter pour plus de détails sur la structure de base du distributeur et son fonctionnement.

L'élément de distributeur externe 3 comporte une extrémité axiale amincie 21, du côté droit sur la figure 1, de même diamètre intérieur que le reste de l'élément 3, mais de diamètre extérieur plus faible, et dans laquelle sont formées deux échancrures radiales 18 ouvertes vers la droite de la figure 1. Ces échancrures sont placées angulairement entre deux orifices d'entrée différents 17a et 17b, alors qu'il n'y a pas d'échancrure, entre les deux orifices égaux 17a.

La profondeur et la largeur des échancrures sont telles que, dans la position symétrique neutre du distributeur, chacune d'elles communique avec deux rainures 16 adjacentes, comme on peut le voir à la figure 2. Cette figure montre que deux autres rainures adjacentes 16 ne correspondent pas à une échancrure mais avec un trou borgne 31. On verra plus loin comment l'écoulement du fluide y est assuré.

On notera que, dans une autre réalisation, le nombre de rainures 16 est de douze. Dans ce cas, il y a quatre échancrures 18.

On compend que, de façon classique, les orifices d'entrée 17a et 17b et les évidements de retour constitués par les échancrures 18 et le trou 31 définissent ainsi avec les rainures 16 des sections de passage ou restrictions modulables en fonction de la rotation relative entre les éléments de distributeur interne 10 et externe 3 telles que figurées parles zones hachurées e, e′ et s et s′. L'élément de distributeur externe 3 comporte en outre des orifices de distribution traversant 19 et 20, tels que représentés, établissant une communication entre les gorges annulaires extérieures susmentionnées de l'élément de distributeur externe 3 et des rainures longitudinales adjacentes 16 de l'élément de distributeur interne 10.

Un manchon cylindrique 22, de même diamètre intérieur que l'élément externe 3, peut tourner par rapport à l'élément interne 10 et coulisse sur lui. Il présente des doigts 23 qui s'engagent dans les échancrures 18 et les obstruent partiellement. Le diamètre extérieur du manchon 22 est le même que celui de l'extrémité amincie 21 de l'élément externe 3, et il comporte, du côté opposé aux doigts 23 une saillie radiale d'entraînement 24, traversée par un passage axial 25 d'écoulement de fluide.

La saillie 24 coopère avec une surface de came d'entraînement 26. Ici cette surface de came est obtenue en coupant en deux, par un plan axial, un arbre cylindrique d'axe perpendiculaire à l'axe du distributeur. Cet arbre est entraîné en rotation par un moteur M, lui-même commandé par un processeur qui reçoit et traite les signaux correspondant aux données à prendre en compte, telles que vitesse, charge, etc... Un ressort 33 pousse la saillie 24 contre la surface de came 26.

A partir du passage axial 25 du manchon, le fluide s'écoule par un passage radial 27 de l'élément interne 10 jusque dans le logement axial interne 12 de celui-ci. Ce logement 12 communique, à gauche sur la figure 1, avec l'orifice de retour 14 du boîtier 1 par un passage radial traversant 28 de l'élément externe 3. De façon avantageuse, l'élément de distributeur interne 10 comporte une extrémité amincie 29 s'étendant dans une cavité de dimension réduite prévue en bout de l'alésage 9 et formée elle-même avec un passage radial traversant 30 sensiblement aligné, en position neutre, avec le passage radial traversant 28 de l'élément de distributeur externe 3.

On a noté plus haut que deux rainures 16 ne correspondent pas, en position neutre, à une échancrure. L'écoulement de retour de fluide à partir de ces rainures se fait de la façon suivante : l'extrémité amincie 21 de l'élément externe 3 présente, à la place de l'échancrure manquante, un trou radial borgne 31 ouvert vers les rainures, de diamètre égal à celui des échancrures 18. En face de ce trou borgne 31, en position neutre, un trou radial traversant 32 est prévu dans l'élément interne et communique avec le logement 12 pour permettre l'écoulement du fluide vers celui-ci.

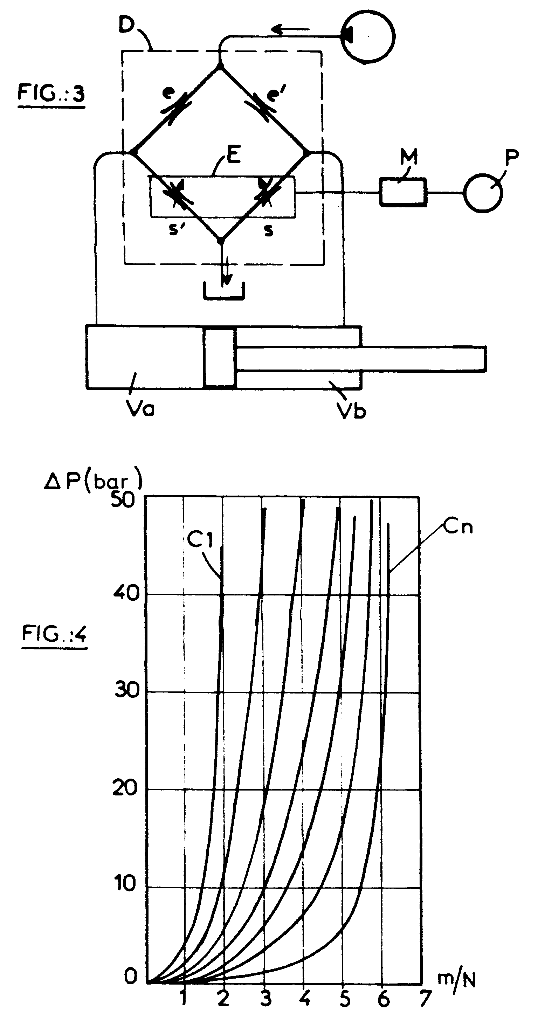

La figure 3 montre le principe de fonctionnement du distributeur. Sur cette figure, D désigne le distributeur dans son ensemble, E l'organe d'étranglement constitué ici par le manchon et ses moyens de déplacement, M le moteur d'entraînement du manchon, P le processeur de commande.

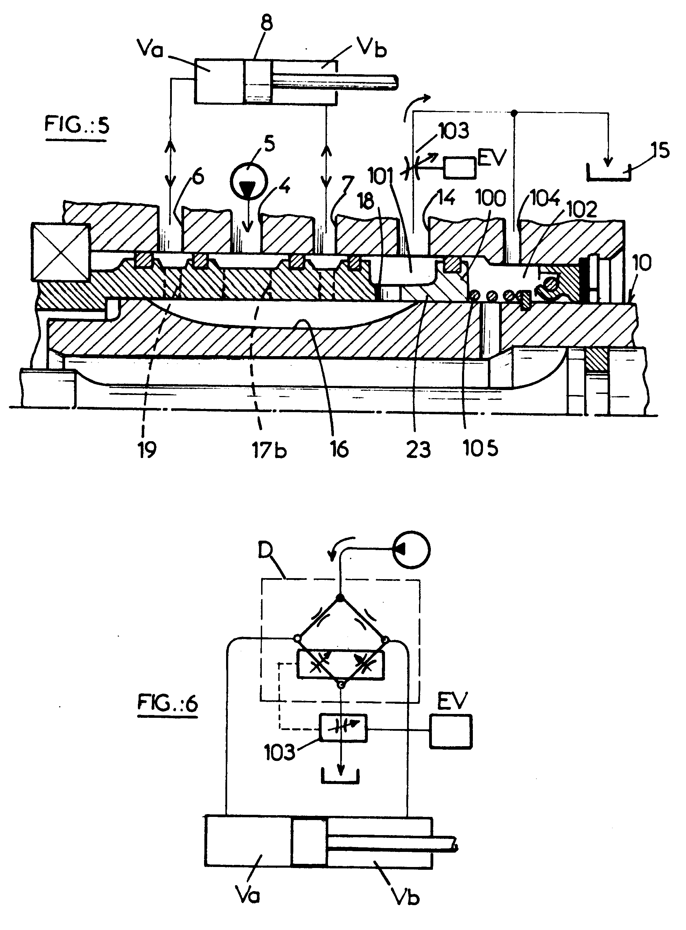

Le distributeur est représenté dans sa position symétrique neutre dans laquelle les restrictions d'entrée et de retour sont sensiblement égales dans chaque branche du distributeur. Par action sur le manchon, les restrictions S et s′ disposées dans les étranglements commandés par les doigts 23 sont plus ou moins étranglées au niveau des rainures 16. Ceci provoque, lors d'une mise en oeuvre du distributeur, un changement de la courbe caractéristique donnant la pression d'assistance $\Delta p$ en fonction du couple d'entrée. Un jeu de courbes caractéristiques est montré à la figure 4, où la caractéristique C1 correspond à l'assistance maximum obtenue pour l'étranglement maximum du manchon et la caractéristique Cn correspond à l'assistance minimum obtenue pour l'étranglement minimum du manchon. Dans le cas d'une application de l'invention aux directions assistées pour véhicules, la courbe C1 est recherchée pour des vitesses faibles ou nulles du véhicule, tandis que la courbe Cn est recherchée pour des vitesses élevées.

Il est à noter que les bords adjacents des échancrures 18 et des doigts 23 peuvent présenter des formes diverses selon le profil recherché pour une courbe caractéristique d'assistance donnée. Dans le mode de réalisation illustré à la Figure 2, les formes choisies sont semi-circulaires et permettent un agencement totalement recouvrant dans la position d'étranglement maximum du manchon, le retour du fluide vers le réservoir étant assuré par les orifices 31 et 32. Dans une variante non représentée de l'invention, les orifices 31 et 32 sont remplacés par une échancrure coopérant avec un doigt 23. Cependant, l'agencement est tel qu'en position d'étranglement maximum un passage de retour du fluide vers le réservoir reste assuré.

Si on considère le second mode de réalisation de l'invention illustré Figure 5, les éléments correspondants à ceux décrits avec le mode de réalisation illustré à la Figure 1 ne seront pas repris en détail. Dans ce second mode de réalisation, le manchon 23 est solidaire d'un piston annulaire 100 coulissant sur l'élément interne 10 et sur l'alésage 2 pour définir dans ce dernier deux cavités 101 et 102. La cavité 101 en communication avec les échancrures 18 est reliée au réservoir 15 au travers de moyens d'étranglement 103 pilotés par un signal électrique de commande, par exemple une électrovanne EV. La cavité 102 est reliée directement et librement au réservoir par l'orifice 104. Enfin, un ressort 105 sollicite le piston 100 et le manchon vers la position d'étranglement maximum. Selon le niveau d'étranglement dans la restriction103, se crée une différentielle de pression donnée entre les cavités 101 et 102. Cette différentielle de pression, contrôlée par le signal électrique de commande, agit sur le piston 100 à l'encontre du ressort 105. Le manchon est alors déplacé jusqu'à une position d'équilibre qui correspond à une courbe caractéristique d'assistance déterminée. La figure 6 montre le schéma hydraulique d'une installation équipée du distributeur illustré à la Figure 5.

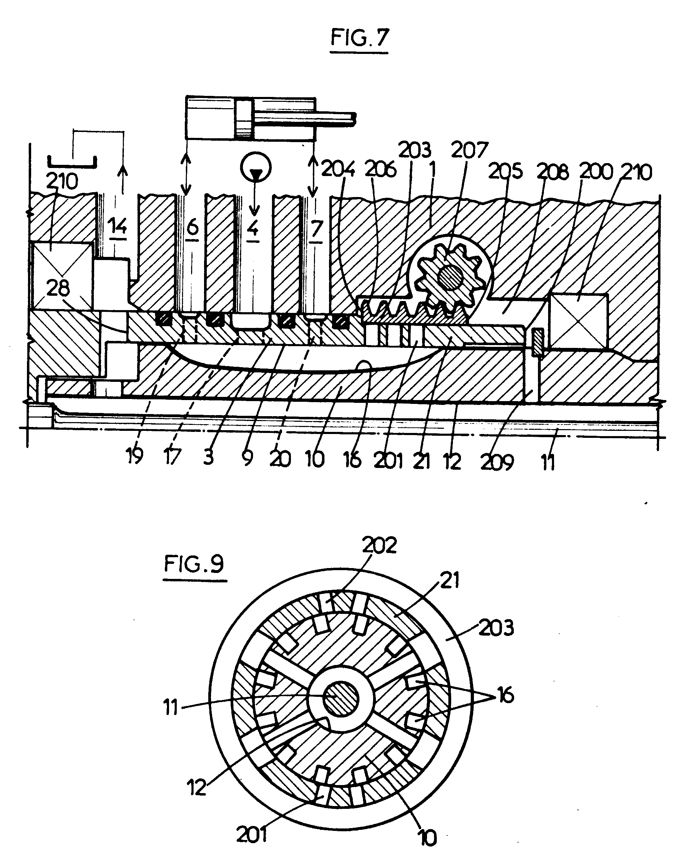

Les figures 7 à 9 illustrent un troisième mode de réalisation de l'invention, les éléments identiques ou équivalents à ceux des deux premiers modes de réalisation portant les mêmes repères.

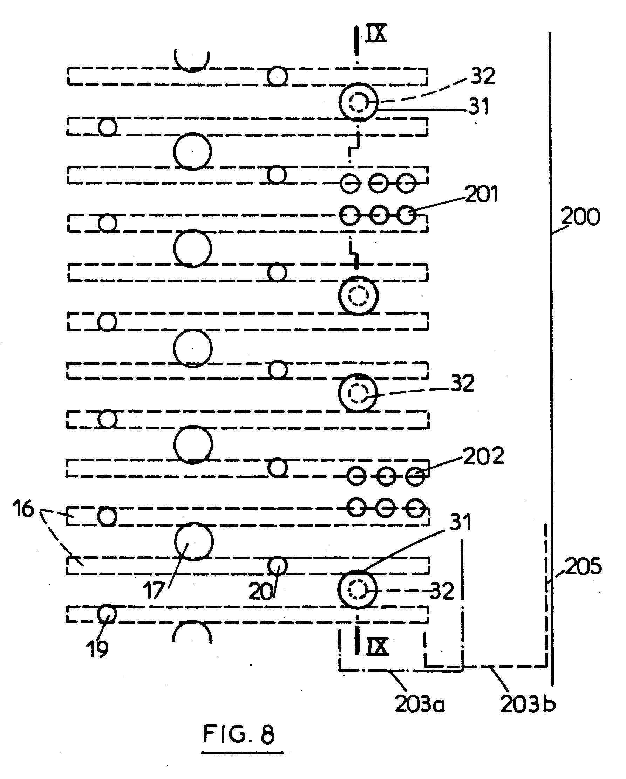

Comme le montre la figure 8, à la différence du premier mode de réalisation, l'élément interne 10 présente cette fois douze rainures 16, et les orifices d'alimentation 17, au nombre de six, sont égaux entre-eux. Cette différence ne correspond pas à un changement dans le mode de fonctionnement.

Alors que la partie axiale amincie 21 du distributeur externe comportait, dans le premier mode de réalisation des échancrures radiales, dans la présente réalisation, cette extrémité amincie se présente comme une partie tubulaire dont le bord 200 est plan, et qui est percé d'un certain nombre de trous 201, 202, groupés en deux groupes de six, comme le montre la figure 8. Cette figure montre également, dans chaque groupe de six trous, que ceux-ci sont disposés en deux lignes parallèles à l'axe, espacées d'une distance égale à l'intervalle entre deux rainures 16 et l'élément interne 10, si bien qu'une rotation de cet élément autour de l'axe obture certains trous tout en dégageant d'autres.

La figure 8 montre également que les trous 201 sont décalés axialement par rapport aux trous 202, en vue d'un résultat qui sera expliqué plus loin.

Un manchon 203 est monté sur la partie d'extrémité 21, et peut coulisser axialement sur elle entre deux positions. Sur la figure 7 est représentée la position où ledit manchon est le plus à gauche, dans cette position, le manchon obture complètement les trous 201 et 202, son bord gauche 204 se trouvant plus à gauche que les trous 201, 202, alors que son bord droit 205 se trouve plus à droite que les mêmes trous. Dans la position extrême opposée, non représentée, les trous 201, 202 sont complètement dégagés, le bord gauche 204 du manchon se trouvant à droite des trous 201, 202.

Dans cette position, le bord droit 205 du manchon coïncide à peu près avec le bord 200 de la partie d'extrémité 21. La figure 8 montre, en 203a et 203b, les deux positions extrêmes du manchon 203.

La face extérieure du manchon 203 présente des cannelures annulaires, formant une crémaillère 206 qui coopère avec un pignon 207 d'entraînement, d'axe perpendiculaire à celui du boîtier, mais ne rencontrant pas celui-ci. Entre le boîtier 1 et le manchon 203, il existe un espace 208, qui communique avec l'évidement intérieur 12 de l'élément interne 10 par l'intermédiaire de trous 209, qui débouchent extérieurement au-delà du bord 200 de la partie d'extrémité 21.

Dans le premier mode de réalisation un écoulement de fluide à travers l'élément interne était prévu même en cas d'étranglement total du passage commandé grâce à un trou borgne radial 31 ouvert dans l'élément externe, et faisant vis-à-vis à un trou radial traversant prévu dans l'élément interne. Cette disposition est maintenue dans le dispositif décrit ici, la seule différence étant que le trou 31 n'est pas un trou borgne, mais un trou traversant, qui peut être obturé lui aussi par le manchon 203, ce qui revient à le transformer en un trou borgne lorsque le manchon se trouve dans la position de gauche sur la figure.

Ainsi le passage de retour du fluide est assuré, lorsque le manchon 203 est dans sa position extrême à gauche, par les trous 31 et 32, et, lorsque le manchon 203 est dans sa position extrême à droite, un supplément de retour fluide est assuré par les trous 201 et 202, l'espace 208, et les trous 209 situés au-delà des bords 200 et 205 de la partie d'extrémité 21 et du manchon 203.

La position des trous 201 et 202 est déterminée pour avoir une variation de la section de retour au réservoir qui soit progressive en fonction du déplacement du manchon 203, les trous 202 étant décalés axialement par rapport aux trous 201 d'un écart à peu près égal au diamètre de l'un d'eux.

On observera que, dans la réalisation décrite, l'élément externe 3 ne se déplace pas dans le sens axial. Cela a permis d'utiliser, pour le relier au boîtier 1, des roulements étanches 210 de type très courant et peu coûteux.

On a décrit, ci-dessus, un dispositif comportant un actionnement mécanique du manchon 203. Il est, bien entendu, possible de prévoir un actionnement hydraulique, du genre décrit à la figure 5. La faible masse du manchon 203 rend une telle réalisation particulièrement efficace.

**Revendications**

1. Distributeur hydraulique rotatif pour servomécanisme, comprenant un élément externe (3), cylindrique, monté à rotation dans un alésage (2) d'un boîtier (1), et un élément interne (10), cylindrique, monté à rotation dans un alésage (9) de l'élément externe (3) et susceptible d'une rotation limitée, de part et d'autre d'une position neutre, l'élément externe (3) comprenant des orifices d'entrée (17) traversants communiquant avec une source de pression de fluide (5), au moins une paire d'orifices de distribution (6, 7) communiquant sélectivement avec une des deux chambres opposées (Va, Vb) d'un organe moteur (8), et des évidements de retour (18) communiquant en permanence avec le réservoir (15), l'élément interne (10) présentant pour sa part des rainures longitudinales (16), régulièrement réparties angulairement, et qui, en position symétrique neutre, étranglent dans la même proportion les orifces de distribution (6, 7), et assurent par ailleurs une communication permanente entre les orifices d'entrée (17) et certains des évidement de retour (18), caractérisé en ce qu'un organe d'étranglement mobile (22, 23; 203) déplacable par rapport à l'élément externe (3) coopère avec au moins certains des évidements de retour (18; 201, 202) du dit élément externe, ci-après désignés évidements de retour commandés (18), de façon à pouvoir faire varier, sous l'effet de moyens de commande, la section de passage du retour du fluide entre au moins certaines rainures (16) et le réservoir (15).

2. Distributeur selon la revendication 1, caractérisé en ce que les évidements de retour commandés sont constitués par des échancrures radiales (18) formées dans une extrémité de l'élément externe (3), et en ce que l'organe d'étranglement est constitué par un manchon (22) coulissant sur l'élément interne, et pourvu de doigts (23) qui pénètrent dans lesdits échancrures.

3. Distributeur selon la revendication 2, caractérisé en ce que les moyens de commande comprennent une pièce susceptible de tourner autour d'un axe perpendiculaire à l'axe de rotation du distributeur, cette pièce portant sur une surface de came (26) qui coopère avec une partie d'appui (24) du manchon (22) et pouvant être entraînée en rotation par un moteur (M) piloté à partir d'un signal électrique de commande, le manchon étant maintenu en appui sur la surface de came par un ressort (33).

4. Distributeur selon la revendication 2, caractérisé en ce que les moyens de commande comprennent un piston annulaire (100) associé audit manchon, monté de façon coulissante sur l'élément interne et dans l'alésage du boîtier pour y définir deux cavités, la première cavité (101) étant en communication, d'une part, avec lesdits évidements de retour (18) et, d'autre part, avec ledit réservoir (15) au travers de moyens d'étranglement (103) pilotés en fonction d'un signal électrique de commande, la seconde cavité (102) étant en communication libre avec ledit réservoir, des moyens élastiques (105) sollicitant ledit piston vers la position d'étranglement maximum du manchon.

5. Distributeur selon la revendication 1, caractérisé en ce que les moyens de commande sont déplacés par des moyens d'actionnement eux-mêmes contrôlés par un processeur électronique (P) susceptible de traiter des signaux représentatifs de divers paramètres d'entrée.

6. Distributeur selon la revendication 1 caractérisé en ce que les évidements de retour commandé sont constitués par un ou plusieurs groupes de trous (201, 202) de faible diamètre qui traversent l'élément externe, et que l'organe d'étranglement est constitué par un manchon (203) coulissant axialement sur ledit élément externe, et qui obture complètement ou partiellement un nombre variable desdits trous.

7. Distributeur selon la revendication 6 caractérisé en ce que lesdits trous (201, 202) des évidements de retour commandé sont disposés, dans chaque groupe, en deux lignes parallèles à l'axe et espacées d'une distance égale à l'intervalle entre deux rainures (16) de l'élément interne (10).

8. Distributeur selon la revendication 6 ou 7, caractérisé en ce que lesdits trous (201, 202) des évidements de retour commandé d'un groupe sont écartés les uns des autres, dans le sens axial, d'un intervalle à peu près égal à leur diamètre et les trous d'un groupe (201) sont décalés axialement par rapport à ceux d'un autre groupe (202) d'un écart à peu près égal à leur diamètre.

9. Distributeur selon l'une des revendications 6 à 8, caractérisé en ce que les moyens de commande comprennent un pignon (207) monté sur un axe perpendiculaire à l'axe de rotation et ne le rencontrant pas, ce pignon coopérant avec une crémaillère (206) dirigée axialement et portée par le manchon, et étant actionné en rotation par un moteur piloté à partir d'un signal électrique de commande.

10. Distributeur selon l'une des revendications 6 à 8, caractérisé en ce que les moyens de commande comprennent une pièce susceptible de tourner autour d'un axe perpendiculaire à l'axe de rotation du distributeur, cette pièce portant une surface de came qui coopère avec une partie d'appui du manchon (203) et pouvant être entraînée en rotation par un moteur piloté à partir d'un signal électrique de commande, le manchon étant maintenu en appui sur la surface de came par un ressort.

11. Distributeur selon la revendication 6, caractérisé en ce que les moyens de commande comprennent un piston annulaire associé audit manchon (203), monté de façon coulissante sur l'élément externe et dans l'alésage du boîtier pour y définir deux cavités, la première cavité étant en communication, d'une part, avec lesdits évidements de retour (201,202) et, d'autre part, avec ledit réservoir au travers de moyens d'étranglement pilotés en fonction d'un signal électrique de commande, la seconde cavité étant en communication libre avec ledit réservoir, des moyens élastiques sollicitant ledit piston vers la position d'étranglement maximum du manchon.

12. Distributeur selon l'une des revendications 6 à 11, caractérisé en ce que les moyens de commande sont déplacés par des moyens d'actionnement eux-mêmes contrôlés par un processeur électrique susceptible de traiter des signaux représentatifs de divers paramètres d'entrée.

**Claims**

1. A rotary hydraulic distributor for a servomechanism comprising an outer cylindrical member (3) which is rotatably mounted within a bore (2) in a casing (1) and an inner cylindrical member (10) rotatably mounted in a bore (9) in the outer member (3) which is capable of limited rotation on either side of a neutral position, the outer member (3) comprising inlet orifices (17) which pass through it and communicate with a source of fluid pressure (5), at least one pair of distribution orifices (6, 7) which communicate collectively with one of the two opposing members (Va, Vb) of drive means (8), and return channels (18) in permanent communication with the reservoir (15), the inner member (10) for its part having longitudinal grooves (16) in a regular angular spacing which when in the neutral symmetrical position obstruct the distribution orifices (6, 7) in the same proportion while providing permanent communication between the inlet orifices (17) and some of the return channels (18), characterised in that a mobile obstructing member (22, 23; 203) which can be displaced in relation to the outer member (3) acts together with at least some of the return channels (18; 201, 202) of the said outer member, hereinafter described as controlled return channels (18), in such a way as to vary the cross-section of the return passage for the fluid between at least some of the grooves (16) and the reservoir (15) under the control of the control means.

2. A distributor according to claim 1, characterised in that the controlled return channels consist of radial depressions (18) formed in one end of the outer member (3) and in that the obstructing member consists of a sleeve (22) sliding on the inner member which is provided with fingers (23) which penetrate the said depressions.

3. A distributor according to claim 2, characterised in that the means of control comprise a component which can turn about an axis perpendicular to the axis of rotation of the distributor, this component bearing against a cam surface (26) which acts together with a supporting part (24) of the sleeve (22) and being capable of being caused to rotate by a motor (M) driven by an electrical control signal, the sleeve being made to bear continually against the cam surface by means of a spring (33).

4. A distributor according to claim 2, characterised in that the means of control comprise an annular piston (100) associated with the said sleeve, mounted in a sliding fashion on the inner member and in the bore in the casing to define two cavities, the first cavity (101) being in communication on the one hand with the said return channels (18) and on the other hand with the said reservoir (15) via obstructing means (103) controlled by an electrical control signal, the second cavity (102) having free communication to the said reservoir, elastic means (105) pushing the said piston towards the position in which the sleeve provides maximum obstruction.

5.  A distributor according to claim 1, characterised in that the means of control are displaced by activating means which are themselves controlled by an electronic processor (P) which can process signals representing various input parameters.

6.  A distributor according to claim 1, characterised in that the controlled return channels comprise one or are groups of holes (201, 202) of small diameter which pass through the outer member and in that the obstructing member consists of a sleeve (203) sliding axially upon the said outer member, which wholly or partly obstructs a variable number of the said holes.

7.  A distributor according to claim 6, characterised in that the said holes (201, 202) of the control return channels are arranged in two lines parallel to the axis in each group and are spaced at a distance equal to the spacing between two grooves (16) in the inner member (10).

8.  A distributor according to claim 6 or 7, characterised in that the said holes (201, 202) of the controlled return channels in a group are offset from each other in an axial direction by an amount approximately equal to their diameter and that the holes in one group (201) are offset axially with respect to those in another group (202) by an amount approximately equal to their diameter.

9.  A distributor according to any one of claims 6 to 8, characterised in that the means of control comprise a pinion (207) mounted on an axis perpendicular to the axis of rotation, which does not intersect it, this pinion acting together with a rag (206) aligned axially and supported by the sleeve and caused to rotate by a motor controlled by an electrical control signal.

10. A distributor according to any one of claims 6 to 8, characterised in that the means of control comprise a component which is capable of rotating about an axis perpendicular to the axis of rotation of the distributor, this component bearing a cam surface which acts together with a bearing surface on the sleeve (203) and can be caused to rotate by means of a motor controlled by an electrical control signal, the sleeve being caused to bear continually against the surfaces of the cam by means of a spring.

11. A distributor according to claim 6, characterised in that the means of control comprise an annular piston associated with the said sleeve (203), mounted in a slidable fashion on the outer member and within the bore in the casing to define two cavities, the first cavity communicating on the one hand with the said return channels (201, 202) and on the other hand with the said reservoir via obstructing means controlled by an electrical control signal, the second cavity having free communication with the said reservoir, and elastic means pressing the said piston towards the position in which the sleeve provides maximum obstruction.

12. A distributor according to one of claims 6 to 11, characterised in that the means of control are displaced by drive means which are themselves controlled by an electric processor capable of processing signals representing various input parameters.

**Patentansprüche**

1.  Hydraulisches Drehschieberventil für Servomechanismen, mit einem zylindrischen Außenelement (3), drehbar in einer Bohrung (2) eines Gehäuses (1) angeordnet, und mit einem zylindrischen Innenelement (10), drehbar in einer Bohrung (9) des Außenelements (3) angeordnet, und für eine begrenzte Verdrehung beiderseits einer Neutralstellung vorgesehen, wobei das Außenelement (3) durchgehende Einlaßöffnungen (17) aufweist, die in Verbindung mit einer Druckmittelquelle (5) stehen, mit mindestens einem Paar Steueröffnungen (6, 7), abwechselnd verbunden mit einer der zwei gegenüberliegenden Kammern (Va, Vb) eines Antriebsorgans (8), und mit Rücklauföffnungen (18), die ständig mit dem Behälter (15) verbunden sind, wobei das Innenelement (10) seinerseits Längsnuten (16) aufweist, die winklig zueinander regelmäßig verteilt sind und die in symmetrischer Neutralstellung im selben Abschnitt die Steueröffnungen (6, 7) absperren und andererseits eine ständige Verbindung zwischen den Einlaßöffnungen (17) und einigen der Rücklauföffnungen (18) zulassen, dadurch **gekennzeichnet,** daß ein bewegliches Drosselelement (22, 23; 203) bezogen auf das Außenelement (3) verschiebbar ist und mindestens mit einigen der Rücklauföffnungen (18; 201, 202) des genannten Außenelements, nachstehend gesteuerte Rücklauföffnungen (18) genannt, derart zusammenarbeitet, daß sie unter dem Einfluß von Steuerungsmitteln den Durchgangsquerschnitt des Flüssigkeitsrücklaufs mindestens zwischen einigen der Nuten (16) und dem Behälter (15) verändern können.

2. Drehschieberventil nach Anspruch 1, dadurch **gekennzeichnet,** daß die gesteuerten Rücklauföffnungen durch Radialnuten (18) gebildet werden, die an einem Ende des Außenelements (3) angeformt sind und daß das Drosselorgan aus einer Muffe (22) besteht, die auf dem Innenelement gleitet und mit Fortsätzen (23) ausgestattet ist, die in die genannten Nuten eingreifen.

3. Drehschieberventil nach Anspruch 2, dadurch **gekennzeichnet,** daß die Steuerungsmittel aus einem Teil bestehen, das um einen Bolzen senkrecht zur Rotationsachse des Steuerventils drehbar ist, wobei dieses Teil auf einer Nockenfläche (26), die mit einer tragenden Fläche (24) der Muffe (22) zusammenarbeitet, abgestützt wird und durch einen Motor (M) in Drehung versetzt werden kann, der durch ein elektrisches Steuersignal gesteuert wird, wobei die Muffe auf einer Oberfläche des Nockens durch eine Feder (33) abgestützt wird.

4. Drehschieberventil nach Anspruch 2, dadurch **gekennzeichnet,** daß die Steuerungsmittel einen Ringkolben (100) enthalten, der mit dieser Muffe in Verbindung steht, verschiebbar auf dem Innenelement und in der Bohrung des Gehäuses angeordnet, so daß zwei Hohlräume gebildet werden, wobei der erste Hohlraum (101) einerseits mit den genannten Rücklauföffnungen (18) und andererseits mit dem genannten Behälter (15) durch Drosseleinrichtungen (103) in Verbindung steht, die in Abhängigkeit von einem elektrischen Steuersignal gesteuert werden, wobei der zweite Hohlraum (102) in ungehinderter Verbindung zum genannten Behälter steht, und elastische Mittel (105) den genannten Kolben in eine maximale Drosselposition der Muffe beaufschlagen.

5. Drehschieberventil nach Anspruch 1, dadurch **gekennzeichnet,** daß die Steuerungsmittel durch Betätigungsmittel verschoben werden, wobei diese selbst durch einen elektronischen Prozessor (P) gesteuert werden, der in der Lage ist, die repräsentativen Signale verschiedener Eingangsparameter zu verarbeiten.

6. Drehschieberventil nach Anspruch 1, dadurch **gekennzeichnet,** daß die gesteuerten Rücklauföffnungen aus einer oder mehreren Gruppen von Bohrungen (201, 202) geringen Durchmessers bestehen, die das Außenelement durchdringen, und wobei das Drosselorgan aus einer Muffe (203) besteht, die axial auf dem genannten Außenelement verschiebbar ist und die vollständig oder teilweise eine unterschiedliche Anzahl der genannten Bohrungen verschließt.

7. Drehschieberventil nach Anspruch 6, dadurch **gekennzeichnet,** daß die genannten Bohrungen (201, 202) der gesteuerten Rücklauföffnungen in jeder Gruppe in zwei achsparallelen Reihen und in gleichem Abstand zwischen zwei Nuten (16) des Innenelements (10) angeordnet sind.

8. Drehschieberventil nach einem der Ansprüche 6 oder 7, dadurch **gekennzeichnet,** daß die genannten Bohrungen (201, 202) der gesteuerten Rücklauföffnungen einer Gruppe voneinander getrennt in axialer Richtung mit einem Abstand angeordnet sind, der in etwa ihrem Durchmesser entspricht, und die Bohrungen einer Gruppe (201) axial, bezogen auf eine andere Gruppe (202), versetzt sind, wobei der Abstand in etwa ihrem Durchmesser entspricht.

9. Drehschieberventil nach einem der Ansprüche 6 bis 8, dadurch **gekennzeichnet,** daß die Steuerungsmittel ein Ritzel (207) enthalten, das auf einer Achse angeordnet ist, die senkrecht zur Rotationsachse verläuft und diese nicht schneidet, wobei dieses Ritzel mit einer Zahnstange (206) zusammenarbeitet, die in axialer Richtung ausgerichtet ist und durch die Muffe gehalten wird und wobei dieses Ritzel durch einen Motor in Drehung versetzt wird, der durch ein elektrisches Steuersignal gesteuert wird.

10. Drehschieberventil nach einem der Ansprüche 6 bis 8, dadurch **gekennzeichnet,** daß die Steuerungsmittel ein Teil enthalten, das in der Lage ist, um eine zur Rotationsachse des Steuerventils senkrechte Achse zu rotieren, wobei dieses Teil eine Nockenoberfläche aufweist, die mit einem stützenden Teil der Muffe (203) in Verbindung steht und in Drehrichtung durch einen Motor mitgenommen wird, der durch ein elektrisches Steuersignal betätigt wird, wobei die Muffe auf der Nockenfläche durch eine Feder abgestützt wird.

11. Drehschieberventil nach Anspruch 6, dadurch **gekennzeichnet,** daß die Steuerungsmittel einen Ringkolben aufweisen, der mit der genannten Muffe (203) in Verbindung steht, verschiebbar auf dem Außenelement und in der Bohrung des Gehäuses angeordnet, so daß dadurch zwei Hohlräume entstehen, wobei der erste Hohlraum einerseits mit den genannten Rücklauföffnungen (201, 202) und andererseits mit dem Behälter durch gesteuerte Drosseleinrichtungen in Abhängigkeit von einem elektrischen Steuersignal in Verbindung steht, wobei der zweite Hohlraum in ungehinderter Verbindung mit dem genannten Behälter steht und durch elastische Mittel den genannten Kolben in die maximale Drosselposition der Muffe drückt.

12. Drehschieberventil nach einem der Ansprüche 6 bis 11, dadurch **gekennzeichnet,** daß die Steuerungsmittel durch die BetätigungsmitteL verschoben werden, die durch einen elektronischen Prozessor gesteuert werden, der in der Lage ist, die repräsentativen Signale verschiedener Eingangsparameter zu verarbeiten.

FIG.:1

FIG.:2

FIG.:3

FIG.:4

FIG.:5

FIG.:6

FIG.7

FIG.9

FIG. 8